(19) Europäisches Patentamt
European Patent Office
Office européen des brevets

(11) **EP 2 000 815 A1**

(12) **DEMANDE DE BREVET EUROPEEN**

(43) Date de publication:
**10.12.2008 Bulletin 2008/50**

(51) Int Cl.:
***G01S 1/00*** $^{(2006.01)}$

(21) Numéro de dépôt: **08156039.3**

(22) Date de dépôt: **12.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **25.05.2007 FR 0703732**

(71) Demandeur: **THALES**
**92200 Neuilly sur Seine (FR)**

(72) Inventeurs:
• **Kirby, Estelle**
  **26000 Valence (FR)**
• **Renard, Alain**
  **26120 Chabeuil (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(54) **Traitement des interférences d'un signal radiofréquence par inversion de puissance**

(57) L'invention concerne un récepteur radiofréquence, notamment pour des applications de positionnement par satellite, devant opérer en environnement où les interférences sont denses, notamment lorsqu'il s'agit de pulses émis par des balises DME. En de-çà du seuil de suppression du signal utile, amplitude ou puissance sont inversés pour améliorer le temps de réponse aux interférences dynamiques. Avantageusement, le seuil de suppression du signal utile et la puissance ou l'amplitude de consigne sont déterminés par analyse de la fonction de densité de probabilité d'amplitude ou de puissance dans sa partie riche en échantillons de faible amplitude/puissance.

FIG.5

# EP 2 000 815 A1

**Description**

La présente invention s'applique aux récepteurs radiofréquence devant recevoir des signaux faibles dans un environnement d'interférences pulsées. C'est notamment le cas des récepteurs de positionnement qui utilisent les signaux reçus de constellations de satellites GNSS (Global Navigation Satellite Systems) telles que les systèmes GPS (Gobal Positionning System) et GPS amélioré, GLONASS (Global Orbiting Navigation Satellite System) et, dans un futur proche, Galileo. Le signal reçu se situe typiquement quelques dizaines de dB en-dessous du bruit thermique du récepteur. Le traitement du signal doit permettre la récupération d'une ou plusieurs porteuses et d'un ou plusieurs codes de modulation desdites porteuses qui comportent des informations caractéristiques du satellite émettant lesdites porteuses. La partie centrale du traitement numérique est une corrélation des signaux reçus avec des répliques locales desdits signaux. Ces traitements supposent un minimum de rapport signal à bruit en entrée de corrélation d'une dizaine de dBHz Ce minimum n'est pas atteint en présence d'interférences qui saturent le récepteur au point de détériorer très sensiblement le signal utile. C'est typiquement le cas des signaux permettant la localisation par rapport à des points remarquables au sol du système DME (Distance Measuring Equipment). Les balises au sol émettent des signaux en réponse aux signaux d'interrogation émis par les aéronefs. Ces balises sol et les interrogateurs embarqués émettent des signaux de forte puissance instantanée (de l'ordre de la dizaine de kilowatts) dans les bandes de fréquences utilisées pour les signaux de positionnement (aux alentours de 1200 MHz)

Une solution connue à ce problème est notamment la technique dite du « blanking » qui consiste à repérer le signal interférant et à supprimer des traitements ultérieurs le signal reçu perturbé par celui-ci. Cette solution est inopérante lorsque la densité d'interférences augmente au point de recouvrir de manière quasi-permanente le signal utile. Dans ce cas, le blanking conduit à éliminer tout signal utile en même temps que le signal interférant. Ce type de scenario est susceptible de se produire dans une grande partie de l'espace aérien européen, notamment à une altitude de l'ordre de40.000 pieds où le nombre de balises DME vues par un aéronef peut être de l'ordre de 60 aux moments de densité maximale de trafic. Il est possible pour améliorer l'efficacité du blanking de découper la bande en plusieurs sous-bandes et de réaliser le blanking sur chacune des sous-bandes, ce qui, pour des interférences données, laisse subsister une part plus importante du signal utile et améliore donc le rapport signal sur bruit.

Cependant, la réalisation d'un blanking efficace suppose un asservissement du gain du récepteur sur une référence de bruit thermique, ce qui introduit un retard de boucle préjudiciable en cas d'évolution rapide du scenario d'interférences. La présente invention permet de s'affranchir de ce retard.

A cette fin, la présente invention propose un dispositif de réception d'un signal radiofréquence comprenant. un module d'estimation d'une grandeur caractéristique dudit signal choisie dans le groupe amplitude, puissance, un module de filtrage de ladite grandeur et un module d'inversion de ladite grandeur, caractérisé en ce que un paramètre au moins d'au moins un des modules du groupe estimation, filtrage est ajustable pour effectuer un traitement optimal d'interférences perturbant le signal radiofréquence.

Avantageusement un des paramètres ajustables du dispositif de réception selon l'invention est la fréquence d'échantillonnage du module de filtrage fixée en fonction des caractéristiques du signal initial et de celles du signal interférant.

Avantageusement un au moins des paramètres ajustables d'un module du dispositif de réception selon l'invention est un paramètre de calcul d'une fonction d'estimation du bruit thermique du récepteur.

Avantageusement le dispositif de réception selon l'invention comprend en outre un module d'estimation du bruit thermique dont les sorties sont fournies au module d'estimation de ladite grandeur caractéristique dudit signal pour corriger le biais de ladite estimation.

Avantageusement ledit module d'estimation du bruit thermique comprend un sous-module d'estimation d'une grandeur caractéristique dudit signal choisie dans le groupe amplitude, puissance, un sous-module de filtrage de ladite grandeur, un sous-module de contrôle automatique du gain du récepteur, un sous-module de commande dudit sous-module de contrôle automatique de gain par les sorties du sous-module de filtrage, les paramètres dudit module de commande étant ajustables pour assurer un gain sensiblement optimal du récepteur.

Avantageusement le dispositif de réception selon l'invention ne comprend qu'un module d'estimation de la grandeur caractéristique du signal choisie dans le groupe amplitude/puissance.

Avantageusement le dispositif de réception selon l'invention ne comprend qu'un module de filtrage du signal.

Avantageusement le sous-module de commande du dispositif de réception selon l'invention comprend un sous-module d'analyse de la fonction de densité de probabilité de ladite grandeur caractéristique dudit signal.

Avantageusement le sous-module d'analyse de la fonction de densité de probabilité de ladite grandeur caractéristique dudit signal réalise une estimation à partir d'un point de comparaison choisi.

Avantageusement le sous-module d'analyse de la fonction de densité de probabilité de ladite grandeur caractéristique dudit signal opère sur un échantillonnage des signaux reçus enrichi en signaux de puissance faible.

Avantageusement, le sous-module d'analyse de la fonction de densité de probabilité de ladite grandeur caractéristique dudit signal génère une innovation en entrée de la CAG qui pondère avec un poids fort les résidus négatifs d'une soustraction des échantillons pour lesquels ladite grandeur caractéristique est élevée et avec un poids faible les résidus positifs de ladite soustraction.

Elle propose également un procédé d'utilisation dudit dispositif.

L'invention présente en outre l'avantage que le gain sur le retard de boucle d'asservissement du CAG procure une plage de temps supplémentaire pour la corrélation et améliore donc globalement l'efficacité du traitement.

L'invention sera mieux comprise et ses différentes caractéristiques et avantages ressortiront de la description qui suit de plusieurs exemples de réalisation et de ses figures annexées dont :

- La figure 1 représente l'amplitude en fonction du temps des interférences pulsées émises par une balise DME;
- La figure 2 représente l'histogramme en fonction de la fréquence des puissances des émetteurs d'interférences pulsées reçues par un aéronef au point le plus brouillé de l'espace aérien européen ;
- La figure 3 représente dans un récepteur de l'état de l'art antérieur l'histogramme de la puissance filtrée en fonction de l'amplitude du signal avec et sans signal pulsé interférant dans la bande E5b du signal Galileo ;
- La figure 4 représente un synoptique général de l'implémentation de l'inversion d'amplitude ou de puissance;
- La figure 5 représente un synoptique de l'implémentation de l'inversion d'amplitude ou de puissance avec un contrôle automatique de gain en boucle fermée synchrone;
- La figure 6 représente un synoptique de l'implémentation de l'inversion d'amplitude ou de puissance avec un contrôle automatique de gain en boucle fermée asynchrone;
- La figure 7 représente une variante de la figure 5 où l'estimation d'amplitude/puissance est factorisée entre le module d'inversion et le module d'asservissement du CAG;
- La figure 8 représente une variante de la figure 5 où l'estimation d'amplitude/puissance et le filtrage sont factorisés entre le module d'inversion et le module d'asservissement du CAG;.
- La figure 9 représente un mode de réalisation de l'invention où l'inversion d'amplitude/puissance est réalisée sur plusieurs sous-bandes de fréquence.

Dans la description et les figures, les sigles, acronymes, formules et abréviations ont la signification indiquée dans le tableau ci-dessous.

| Sigle | Signification |
|---|---|
| $\lambda$ | Longueur d'onde de la porteuse |
| $Alpha_i$ | Paramètres de réglage du CAG |
| Blanking | Suppression du signal utile en présence d'interférences |
| CAG | Contrôle Automatique du Gain |
| CAN ou ADC | Convertisseur Analogique Numérique ou Analog Digital Converter |
| CM | Core Module ou Coeur |
| DME | Distance Measuring Equipment |
| e | Signal reçu |
| EUROCAE | European Organisation for Civil Aviation Equipment |
| f(a) | Fonction non linéaire optimale du bruit gaussien |
| FDAF | Frequency Domain Adaptative Filtering |
| FIR | Finite Impulse Response filter ou Filtre à réponse impulsionnelle finie |
| FPGA | Field-Programmable Gate Array |
| G | Gain du récepteur |
| GLONASS | Global Orbiting Navigation Satellite System |
| GNSS | Global Navigation Satellite System |
| GPS | Global Positioning System |
| JTIDS | Joint Tactical Information Distribution System |
| LSB | Least Significant Bit |

(suite)

| Sigle | Signification |
|---|---|
| OL | Oscillateur Local |
| OSW$_i$ | Sorties de la partie haute du CM |
| P(a) | Bruit de forme gaussienne |
| P$_{consi}$ | Puissance de consigne |
| P$_e$ | Puissance du signal d'entrée |
| P$_s$ | Puissance du signal de sortie |
| TACAN | Tactical Air Navigation |
| UWB | Ultra Wide Band |
| VGA | Voltage Gain Amplifier |

Les systèmes GNSS utilisent actuellement des bandes de fréquence qui sont très proches des fréquences allouées aux balises de radionavigation DME. Les fréquences GPS et GPS futur sont par bande: E6 (1260-1300 MHz), L2 (1216-1240 MHz) et L5/E5a (1164-1188 MHz). Les fréquences Galileo sont: E6, E5a et E5b (1188-1215 MHz). Les fréquences d'DME sont 1025-1150 MHz pour un interrogateur embarqué et les balises au sol émettent dans la bande 962-1213 MHz (donc dans les bandes E5a et E5b de GALILEO et L5 de GPS). La bande totale est découpée en 126 canaux et émission et réception d'une balise sont décalés de 63 MHz. Les canaux sont donc espacés de 1 MHz. Ce sont des paires d'impulsions, chacune de largeur de spectre de 300 kHz.qui sont émises par l'interrogateur embarqué. Les balises au sol leur répondent avec un retard fixe de 50 microsecondes et le récepteur de l'interrogateur embarqué recherche ensuite les paires d'impulsion en réponse qui ont l'espacement correct entre elles. La puissance du signal émis par les balises sol est de l'ordre de 15 kW.

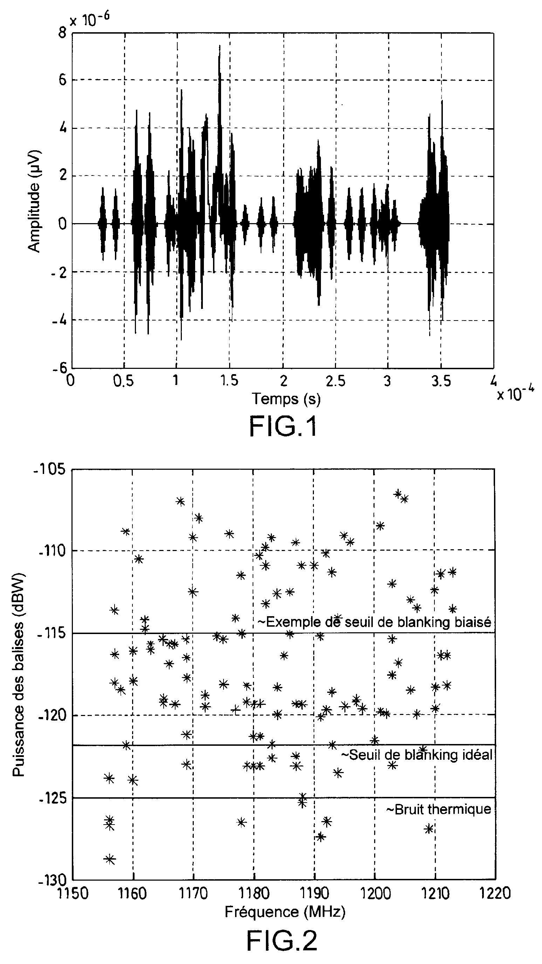

Ces caractéristiques de fonctionnement, schématisées en amplitude/temps sur la figure 1 expliquent le caractère très perturbateur du système DME pour la navigation par satellite, ceci d'autant plus que le taux d'occupation des interférences peut atteindre 100% dans les environnements très denses en balises comme le Nord de l'Europe à haute altitude.

La figure 2 montre le nombre et la puissance des balises DME dans les bandes de fréquence allouées qui sont très proches de L5/E5a au point de densité maximale dans l'espace aérien nord européen dit « hotspot ». Le gain avion est à titre d'illustration fixé à -10dBi sur cette figure. Sur la figure sont également représentés : un exemple de niveau du bruit thermique (# - 125dBW), le seuil de blanking résultant de l'estimation biaisée du bruit thermique (# - 115 dBW) et le seuil de blanking optimal (# - 122 dBW). L'écart de 7 dBW est très significatif par rapport aux performances demandées des récepteurs.

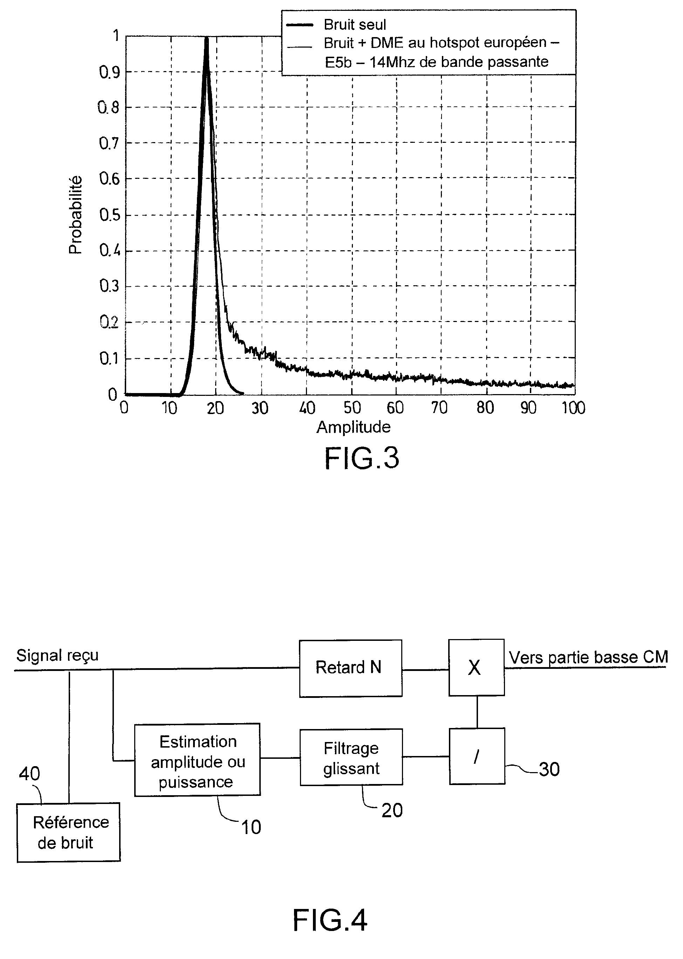

Or un signal GNSS est en-dessous du bruit thermique. Un rapport signal sur bruit minimal est indispensable pour que le traitement du signal, basé pour l'essentiel sur des corrélations, éventuellement aidées, des éléments reçus et de leurs répliques locales, puisse être efficace. En particulier, si le CAN est saturé par les interférences, le signal utile au niveau des corrélateurs sera extrêmement dégradé. Cette impossibilité d'atteindre le signal utile est clairement illustrée sur la figure 3 qui montre les courbes de puissance en sortie de filtrage avec et sans interférences DME. L'horizon temporel est d'environ 2 μs. Des situations analogues peuvent se produire en présence de radars ou de dispositifs pulsés très large bande (UWB)

Actuellement, les récepteurs GNSS utilisent des traitements avant corrélation pour traiter les interférences pulsées, par exemple, la méthode « blanking » ou la méthode « FDAF ».

Le blanking est un procédé simple consistant à couper le signal pendant l'interférence. Le procédé ne peut fonctionner lorsque les interférences sont trop denses car le signal utile est alors complètement perdu. La méthode FDAF constitue une amélioration de ce procédé. Elle consiste à découper la bande de réception en sous-bandes et à appliquer le procédé de blanking à chaque sous-bande.

Cependant, ces méthodes, si elles permettent de détecter des interférences pulsées et de les éliminer, supposent que l'on connaisse précisément la puissance du bruit thermique. Par exemple, si un pulse a une amplitude supérieure à celle du bruit, alors on peut dire avec une faible probabilité de fausse alarme qu'un pulse est présent et on peut l'éliminer. Cela revient à exiger une CAG « idéale ». Dans certains cas, on peut se tromper sur la connaissance de la puissance du bruit. sans que cela remette en cause l'efficacité du blanking global ou par bande. C'est le cas pour des scénarios où les interférences pulsées sont très puissantes et donc facilement détectables: les méthodes temporelles marchent bien car les pulses sont détectés et pas pris en compte dans l'estimation du bruit thermique. C'est également le cas dans des scénarios où les interférences pulsées sont peu nombreuses et peu puissantes : l'estimation du niveau de bruit est légèrement biaisée mais cela n'empêche pas le fonctionnement du récepteur, même si celui-ci est un peu dégradé.

En revanche , pour des scénarios où les interférences pulsées sont nombreuses et peu puissantes (difficilement détectables), l'estimation du nombre de bits sur lequel est codé le bruit est fortement biaisée. Les méthodes temporelles ne sont plus efficaces. (probabilité de non détection en très forte augmentation). Les interférences pulsées sont détectées relativement à l'estimation du bruit thermique. Comme l'estimation du bruit thermique est plus forte que le bruit thermique lui-même quand des pulses peu puissantes apparaissent et ne sont pas détectés, le seuil de blanking est donc plus élevé qu'il ne devrait être comme illustré sur la figure 2. Donc des interférences pulsées entrent dans le calcul de la CAG. La CAG réagit en descendant le gain du VGA. Donc, encore plus d'interférences pulsées entrent dans l'estimation du bruit thermique et ainsi de suite. Ceci continue à diverger jusqu'à que le récepteur accepte la majorité des interférences pulsées et ne code plus le signal utile.

Diverses méthodes permettent de fournir une référence de bruit non biaisée pour déterminer le seuil de blanking. Certaines sont présentées de manière détaillée dans la présente description. Elles présentent cependant en général l'inconvénient d'introduire un retard de boucle qui ralentira l'ajustement du dispositif à des variations des paramètres de l'interférence.

Pour résoudre ce problème non résolu dans l'art antérieur, l'idée de l'invention est de réaliser une inversion de l'amplitude ou de la puissance du signal reçu pour écrêter les pulses. Si les interférences pulsées ne sont pas saturées par le CAN, les échantillons sont récupérés par l'inversion d'amplitude ou de puissance. Par exemple, si le bruit thermique a été codé sur 4 bits et que le CAN peut coder linéairement 8 bits, les échantillons sur les 4 bits de poids forts sont ramener sur les 4 bits de poids faible. La phase des échantillons est conservées mais le rapport signal sur bruit est dégradé. Cela revient à faire une « CAG numérique » qui réagit très rapidement en présence de pulses sans que la « CAG analogique » ne réagisse. Cette solution permet aussi de gagner en corrélation le temps de réponse de la CAG analogique en présence d'interférences continues.

L'inversion d'amplitude ou de puissance consiste à multiplier le signal d'entrée par l'inverse de l'estimation d'amplitude ou de puissance filtrée. Dans le cas où l'inversion porte sur la puissance du signal, la puissance du signal de sortie est égale à l'inverse de la puissance du signal d'entrée, à une constante près. Le gain du récepteur est donné par rapport à une puissance de consigne par la formule :

$$G = P_{consi}/P_e$$

Dans le cas où l'inversion porte sur l'amplitude du signal, la puissance du signal de sortie est égale à l'inverse du carré de la puissance du signal d'entrée, à une constante près. Le gain du récepteur est donné par rapport à un puissance de consigne par la formule :

$$G = \left(P_{consi}/P_e\right)^2$$

L'inversion de puissance est théoriquement optimale. En revanche, l'inversion d'amplitude est moins sensible aux imperfections de réalisation. L'inversion de puissance ne peut cependant se substituer complètement au blanking : lorsque le CAN est saturé par les interférences pulsées, il est nécessaire d'effectuer un blanking afin de limiter les fréquences parasites qui, sinon, entreraient dans la corrélation. Pour cette raison et pour disposer d'une référence pour fixer $P_{consi,,}$ il est nécessaire de disposer d'une référence de bruit non biaisée.

Il y a plusieurs modes possibles de réalisation de la capture de la référence de bruit non biaisée. Les éléments communs spécifiques à l'invention de l'architecture générale de réalisation sont décrits sur la figure 4. Le dispositif travaille avantageusement en bande de base. Cela permet de réduire la dynamique avant passage en fréquence intermédiaire. Les différentes fonctions représentées sur la figure sont avantageusement réalisées dans un même circuit FPGA dans lequel pourront également être implantées les fonctions de récupération du bruit. Le premier opérateur 10 est une fonction d'estimation d'amplitude classique de type $I^2+Q^2$, (alternativement Racine ($I^2+Q^2$) ou $|I|+|Q|$). La deuxième fonction 20 réalise le filtrage de l'estimation pour obtenir la moyenne de la densité de probabilité d'amplitude. Ce filtrage est réalisé sur un horizon de temps adapté, par exemple $2,2\mu s$ dans E5b, ce qui représente un échantillon de 128 points. L'estimation est avantageusement effectuée sur un écart type représentant 10% de la moyenne. Dans une hypothèse d'interférences de dynamiques variables, il est possible d'utiliser un filtre de Kalman, éventuellement adapté à un pulse carré d'amplitude minimale détectable. On applique ensuite aux sorties du filtre un opérateur 30 d'inversion d'amplitude ou de puissance qui est activé lorsque le CAN n'est pas saturé, le seuil de saturation dépendant de l'estimation du bruit thermique.

Une premier mode de réalisation consiste à estimer le bruit thermique en absolu, de donner un seuil de blanking en absolu et de faire attention que le bruit thermique n'évolue pas pendant les essais. Afin d'estimer le bruit thermique en absolu, l'estimation du gain de la chaîne HF est effectué par calibration en laboratoire et l'estimation du facteur de bruit en mesurant le bruit de la chaîne avec l'antenne débranchée. Cette association de deux mesures ponctuelles permet de connaître exactement le bruit dans la chaîne HF à un moment donné et d'effectuer le blanking en fonction de cette estimation de bruit. Il faut disposer d'abaques permettant de dériver les variations de biais d'estimation du bruit thermique en fonction de la température, de la pression, de la dynamique et du vieillissement. Cette solution peut être praticable pour des environnements stables mais est moins adaptée à des récepteurs soumis à des dynamiques importantes.

Un deuxième mode de réalisation consiste à utiliser une estimation non biaisée du bruit thermique par injection d'une innovation calculée pour rendre le gain du récepteur optimal. L'innovation est calculée à partir de l'analyse de la fonction de densité de probabilité de puissance ou d'amplitude du signal. Cette fonction est analysée dans sa partie où sont peu présents les échantillons de forte amplitude ou puissance qui est peu affectée par les interférences comme le montre la figure 3.

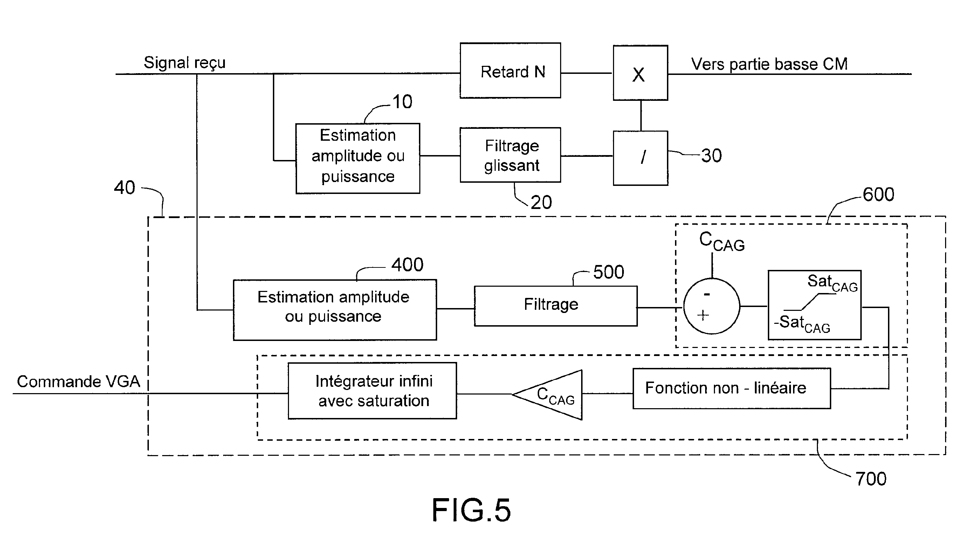

Cette injection peut être réalisée de manière synchrone. Le module utilisé se situe dans la partie basse (40) de la figure 5. Il peut être implanté dans le même FPGA que le dispositif de base de l'invention. Il comprend un sous-module d'estimation 400 de l'amplitude ou de la puissance du signal, un sous-module de filtrage 500 qui aura la même constante de temps que le module de filtrage décrit ci-dessus. Classiquement, le dispositif comprend un sous-module de CAG 60. En entrée de ce sous-module 600, on applique aux sorties du sous-module de filtrage un sous-module de commande 700 qui comprend une ou plusieurs fonctions non linéaires qui vont générer une innovation à partir de paramètres d'optimalité qui dépendent du contexte d'emploi. Si le bruit a une forme P(a), la fonction non linéaire optimale est donnée par la formule

$$f(a) = (dP(a)/da)/P(a)$$

f(a) est une fonction linéaire lorsqu'il n'y a pas de pulses. En présence de pulses, la fonction linéaire est conservée dans la partie gauche de la distribution qui est, en revanche, complètement modifiée dans sa partie droite. Il est également possible d'utiliser une dérivée de f(a).

L'innovation est ensuite introduite dans la CAG. Il y a plusieurs variantes possibles pour réaliser l'observation et calculer l'innovation.

Une première variante consiste à choisir un point de comparaison sur la courbe et à asservir la CAG en utilisant une pondération plus forte des échantillons de plus faible amplitude que le point choisi. Une deuxième variante consiste à estimer la courbe de puissance filtrée par ajustement à une courbe théorique que l'on paramètre sur plusieurs points, par exemple trois. Une troisième variante consiste à déterminer un histogramme de ladite fonction de probabilité et d'en extraire la contribution du bruit seul puis de calculer la commande de CAG.

Dans les deux premières variantes, on cherche à s'asservir sur le ou les points de comparaison choisis en le ou les caractérisant par le ratio de la partie gauche et de la partie droite. Une solution est de donner plus de poids à un événements de valeur inférieure a ceux dépassant le point choisi par une fonction non linéaire adéquate, ceci permet de réduire considérablement l'effet les valeurs élevées dues aux pulses. On peut en pratique parvenir à ce résultat par l'utilisation d'une des fonctions suivantes ou d'une autre qui serait comparable :

- fonction non linéaire tout ou rien : si l'événement est inférieur au point choisi alors il lui affecte un poids k supérieur à 1, dans le cas contraire, il reste inchangé ; ceci va conduire à un équilibre tel que la proportion relative soit la valeur k or celle-ci à été choisie pour obtenir la bonne valeur de la moyenne en présence de bruit seul ;

  - fonction saturée dissymétrique : le fonctionnement est voisin du précédent mais permet en régime stable un fonctionnement linéaire au voisinage du point choisi permettant une meilleure stabilité de la CAG , ce qui aboutit à un bon compromis temps de réponse bruit résiduel. Dans la troisième variante, le principe est de déterminer la puissance du bruit par l'observation de l'histogramme (ou la fonction de probabilité des amplitudes) ceci peut être réalisé par plusieurs méthodes :

- décomposition de l'histogramme en somme de lois du khi2 ( ou approximé par une gaussienne dans le cas avec filtrage optionnel ) et détermination de la plus probable représentative du bruit par exemple la plus grande dans les amplitudes petites ( critère optimisé en fonction de l'environnement à priori) ;
- décomposition de l'histogramme en somme de lois à priori des interférence et d'une loi attendue pour le bruit ($X^2$, gaussienne) la moyenne de la loi de bruit étant alors représentative de la puissance du bruit seul ;

- calcul d'une fonction de vraisemblance par corrélation avec la forme attendue en bruit seul éventuellement pondéré à priori.

Le calcul de l'histogramme doit être réalisé sur un horizon suffisant pour être représentatif.

Le pas de l'histogramme est choisi suffisamment fin pour discriminer la fonction attendue (particulièrement sa largeur égale à l'écart type) des autres contributions généralement plus proches de fonctions de Dirac.

Le filtrage après comparaison de la consigne n'est pas essentiel .

On détermine alors la composante due au bruit et on peut comparer sa moyenne avec la valeur de consigne.

Seule la première variante est décrite de manière détaillée dans la présente demande de brevet.

Dans la suite de la description, le point de comparaison choisi est celui qui partage les échantillons en 10% de plus faible probabilité d'amplitude et 90% de plus forte probabilité. Une autre répartition est possible et le réglage du circuit de commande peut être effectué pour réaliser une adaptation fine au profil d'interférences particulières. Cette répartition est dénommée « Alpha » dans les exemples numériques commentés ci-dessous

Il faut également choisir d'autres paramètres « Alpha $_1$ », « Alpha $_2$» et « Alpha $_3$» pour assurer un gain sensiblement optimal du récepteur qui minimise le biais affectant le seuil de blanking.

« Alpha $_1$» est la probabilité de la CAG qui se calcule comme indiqué dans la suite de la description. « Alpha $_2$» est la pondération de saturation et « Alpha $_3$» est le paramètre de réglage du seuil de blanking.

Nous voulons établir la commande de la CAG en observant les « Alpha »% d'échantillons dont l'amplitude est la plus faible.

Nous soustrayons une commande contenant (1-« Alpha »)% des échantillons pour centrer l'histogramme avec « Alpha »% des échantillons en dessous de 0 et (1-« Alpha »)% des échantillons au-dessus de 0. Ensuite nous saturons très fortement les résidus. Nous pondérons les résidus négatifs avec un poids (1-« Alpha $_2$»), par exemple 0.9, et les résidus positifs avec un poids « Alpha $_2$», dans ce cas 0.1. L'asservissement de la boucle de CAG a un donc un point d'équilibre lorsque ce résidu vaut 0.

« Alpha 2» est lié au filtrage de la puissance avant le calcul de la commande de CAG et à la forme de la gaussienne de bruit. Dans notre cas, le filtrage est effectué sur 128 échantillons (~2μs) donc l'écart-type du bruit thermique est diminué. Lorsque le réglage est autour de quelques pourcents, la gaussienne change fortement, donc « Alpha 2 » doit être petit.

Ceci permet de prendre en compte les occurrences et pas les amplitudes de la fonction de probabilité pour les écarts importants et conserve une petite plage linéaire permettant le filtrage du bruit résiduel de l'estimation de puissance.

Le seuil de blanking « Alpha $_3$» fixé par exemple dans nos applications à une valeur comprise entre 0 et 16.

« Alpha 1 » est calculé de la manière suivante :

- I et Q sont des variables gaussiennes

$$E[I] = E[Q] = 0 \ , \ E[I^2] = E[Q^2] = 2^{2*(Nb\_out+Diff\_bruit)} = \sigma^2$$

- $I^2+Q^2$ ont une moyenne de $2^{2*(Nb\_out+Dff\_bruit)+1}$ et un écart-type de $2^{2*(Nb\_out+Diff\_bruit)+1}$

Car :

$$moy(I^2+Q^2)=E[I^2+Q^2]=E[I^2]+E[Q^2]=2*E[I^2]= 2^{2*(Nb\_out+Diff\_bruit)+1} =2\sigma^2$$

$$var(I^2+Q^2)=E[(I^2+Q^2-2\sigma^2)^2]=E[I^4]+ E[Q^4]+4\sigma^4+2E[I^2Q^2]-4\sigma^2E[I^2]-4\sigma^2E[Q^2]$$

$$= 3\sigma^4+3\sigma^4+4\sigma^4+2\sigma^4-4\sigma^4-4\sigma^4 = 4\sigma^4$$

car $E[x_1x_2x_3x_4]= E[x_1x_2] E[x_3x_4]+ E[x_1x_3] E[x_2x_4]+ E[x_1x_4] E[x_2x_3])$

- $I^2+Q^2$ est moyenné sur 128 échantillons, la moyenne n'a pas changé mais l'écart-type devient :

$$\frac{1}{\sqrt{128}} * 2^{2*(Nb\_out+Diff\_bruit)+1}$$

Car :

$$moy\left(\sum_N \left(I^2+Q^2\right)\right) = E\left[\sum_N \left(I^2+Q^2\right)\right] = \sum_N E\left[I^2+Q^2\right] = N2^{2*(Nb\_out+Diff\_bruit)+1} = 2N\sigma^2$$

$$\text{var}\left(\sum_N \left(I^2+Q^2\right)\right) = E\left[\left(\sum_N \left(I^2+Q^2\right)-2N\sigma^2\right)^2\right] = E\left[\left(\sum_N \left(\left(I^2+Q^2\right)-2\sigma^2\right)\right)^2\right]$$

$$= \text{var}\left(\sum_N \left(\left(I^2+Q^2\right)-2\sigma^2\right)\right) = NE\left[\left(\sum_N \left(\left(I^2+Q^2\right)-2\sigma^2\right)\right)^2\right]$$

$$= 4N\sigma^4$$

- Les tables classiques associent à chaque valeur aléatoire sa probabilité dans le cas d'une gaussienne centrée et d'écart-type 1. Pour obtenir une probabilité de 10% par exemple, nous prenons l'opposé de la valeur à 90% (-1.29), nous la multiplions par l'écart-type et nous ajoutons le décentrage de la gaussienne. Dans cet exemple, nous avons donc se placer:

$$-1.29\frac{1}{\sqrt{128}} * 2^{2*(Nb\_out+Diff\_bruit)+1} + 2^{2*(Nb\_out+Diff\_bruit)+1}$$

$$\left(1-\frac{1.29}{\sqrt{128}}\right)2^{2*(Nb\_out+Diff\_bruit)+1} = 0.8860$$

Les exemples de réglage figurant dans le tableau ci-dessous sont donnés à titre purement illustratif :

| Réglage CAG : « alpha » | Probabilité CAG « alpha 1 » | Saturation « alpha 2 » | Réglage du seuil de blanking « alpha 3 » | Type de CAG |
|---|---|---|---|---|
| 6% | 0.863 | 0.06 | 16 | |
| 10% | 0.886 | 0.1 | 8 | CAG choisie pour le scénario DME/TACAN |
| 17% | 0.916 | 0.1 | 4 | |
| 25% | 0.9408 | 0.1 | 2 | CAG choisie lorsque les scénarios de pulses ne sont pas clairs |

(suite)

| Réglage CAG : « alpha » | Probabilité CAG « alpha 1 » | Saturation « alpha 2 » | Réglage du seuil de blanking « alpha 3 » | Type de CAG |
|---|---|---|---|---|
| 33% | 0.9346 | 0.1 | 1 | |
| 50% | 1 | 0.5 | 0 | CAG classique |

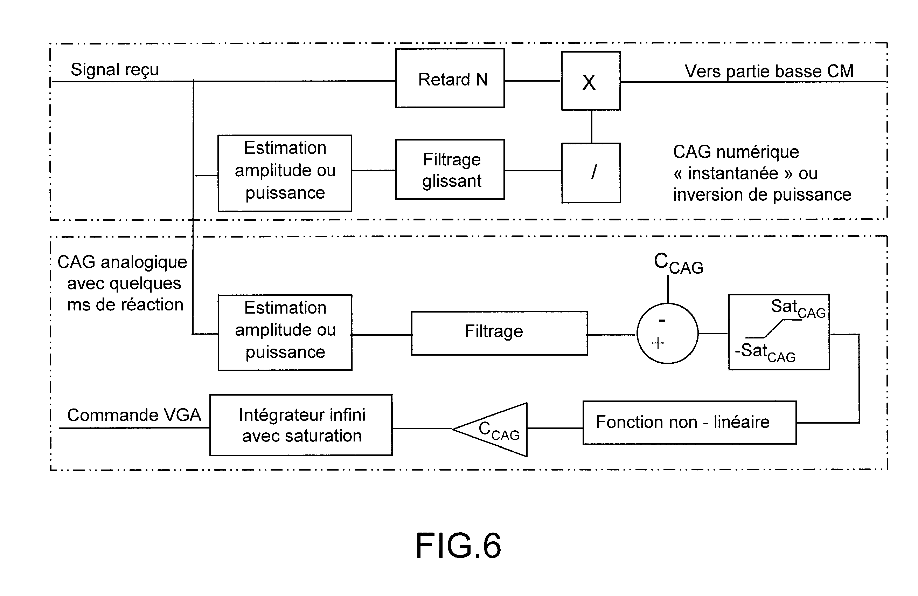

Il est également possible d'injecter une estimation du bruit thermique sur un temps de réaction supérieur à la constante de filtrage. On peut choisir par exemple un temps de cycle de quelques ms. Cette variante est illustrée sur la figure 6. L'avantage de cette option est d'autoriser une dynamique plus réduite des opérateurs.

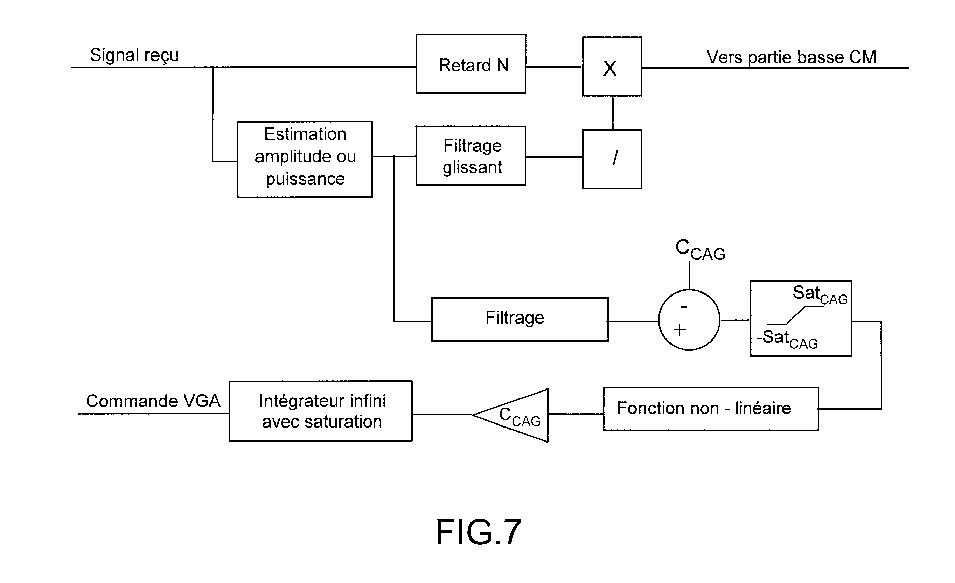

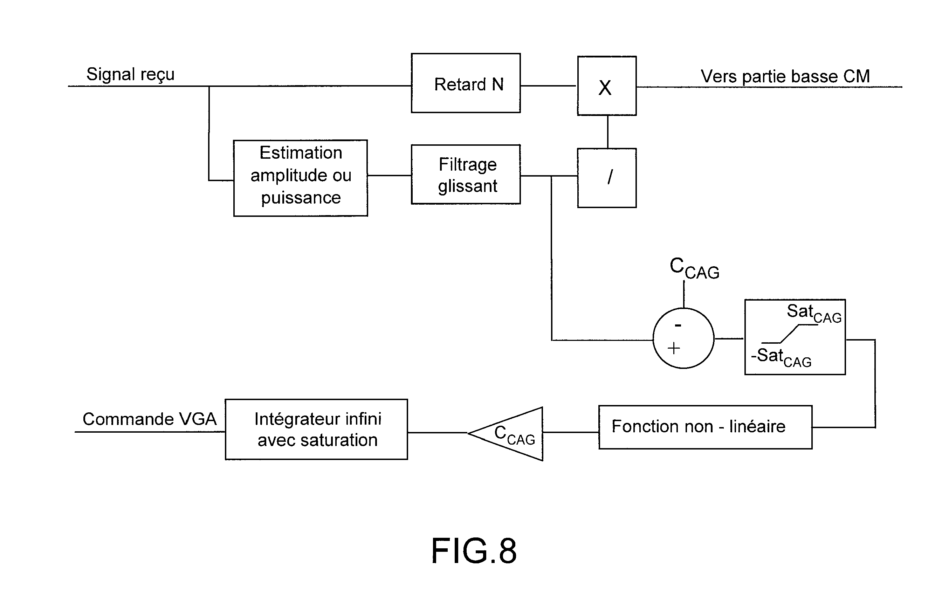

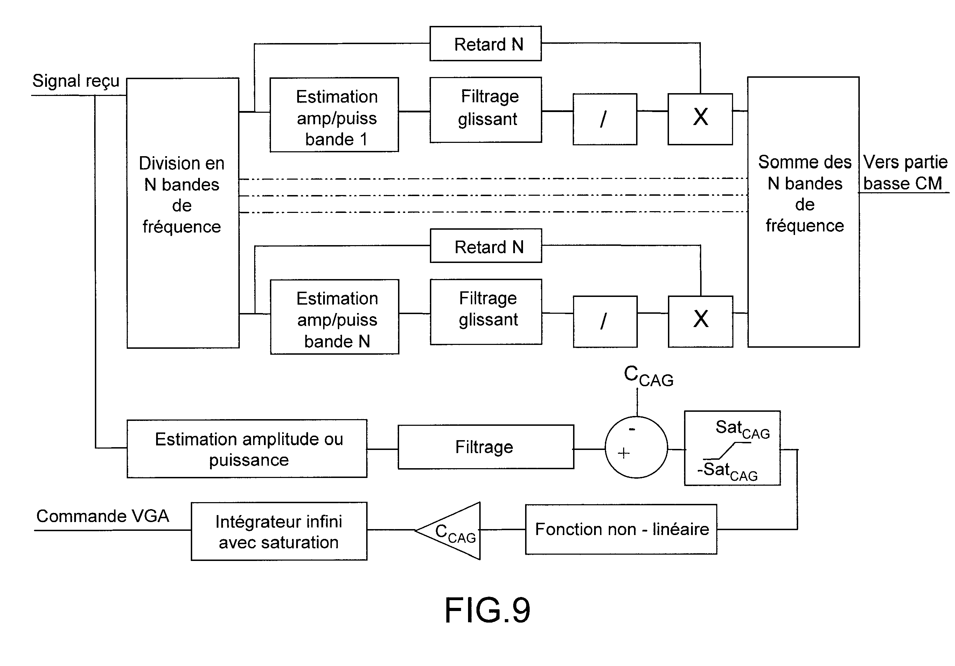

Il est possible de factoriser certains éléments d'architecture des deux sous-modules, en particulier la fonction d'estimation de l'amplitude/puissance (figure 7) et la fonction de filtrage (figure 8). Il est également possible de réaliser une inversion par bande de fréquence (figure 9). Dans cette option, un blanking sera également réalisé dans chaque bande au delà du seuil. Par exemple pour un signal BOC, on pourra réaliser l'inversion et le blanking dans les deux bandes larges et les deux bandes étroites. L'avantage de réaliser inversion et blanking par bande est d'améliorer le rapport signal sur bruit, la part du signal utile conservée étant plus élevée.

## Revendications

1. Dispositif de réception d'un signal radiofréquence de navigation comprenant.un module d'estimation (10) d'une grandeur caractéristique dudit signal choisie dans le groupe amplitude, puissance, un module de filtrage (20) de ladite grandeur et un module d'inversion (30) de ladite grandeur, **caractérisé en ce que** un paramètre au moins d'au moins un des modules du groupe estimation, filtrage est ajustable pour effectuer un traitement sensiblement optimal d'interférences perturbant le signal radiofréquence.

2. Dispositif de réception selon la revendication 1 **caractérisé en ce qu'**un des paramètres ajustables est la fréquence d'échantillonnage du module de filtrage (20) fixée en fonction des caractéristiques du signal initial et de celles du signal interférant.

3. Dispositif de réception selon l'une des revendications 1 à 2 **caractérisé en ce qu'**un au moins des paramètres ajustables est un paramètre de calcul d'une fonction d'estimation du bruit thermique du récepteur.

4. Dispositif de réception selon l'une des revendications 1 à 2 **caractérisé en ce qu'**il comprend en outre un module d'estimation (40) du bruit thermique dont les sorties sont fournies au module d'estimation de ladite grandeur caractéristique dudit signal pour corriger le biais de ladite estimation.

5. Dispositif de réception selon la revendication 4 **caractérisé en ce que** ledit module d'estimation (40) du bruit thermique comprend un sous-module d'estimation (400) d'une grandeur caractéristique dudit signal choisie dans le groupe amplitude, puissance, un sous-module de filtrage (500) de ladite grandeur, un sous-module de contrôle automatique du gain du récepteur (600), un sous-module de .commande (700) dudit sous-module de contrôle automatique de gain par les sorties du sous-module de filtrage (500), les paramètres dudit module de commande (700) étant ajustables pour assurer un gain sensiblement optimal du récepteur.

6. Dispositif de réception selon la revendication 5 **caractérisé en ce qu'**il ne comprend qu'un module d'estimation (10, 400) de la grandeur caractéristique du signal choisie dans le groupe amplitude/puissance.

7. Dispositif de réception selon la revendication 6 **caractérisé en ce qu'**il ne comprend qu'un module de filtrage (20, 500) du signal.

8. Dispositif de réception selon l'une des revendications 5 à 7 **caractérisé en ce que** le sous-module de commande (700) comprend un sous-module d'analyse de la fonction de densité de probabilité de ladite grandeur caractéristique dudit signal.

9. Dispositif de réception selon l'une des revendications 5 à 7 **caractérisé en ce que** le sous-module d'analyse de la fonction de densité de probabilité de ladite grandeur caractéristique dudit signal réalise une estimation à partir d'un point de comparaison choisi.

10. Dispositif de réception selon la revendication 9 **caractérisé en ce que** le sous-module d'analyse de la fonction de densité de probabilité de ladite grandeur caractéristique dudit signal opère sur un échantillonnage des signaux reçus enrichi en signaux de puissance faible.

11. Dispositif de réception selon la revendication 10 **caractérisé en ce que** le sous-module d'analyse de la fonction de densité de probabilité de ladite grandeur caractéristique dudit signal génère une innovation en entrée de la CAG qui pondère avec un poids fort les résidus négatifs d'une soustraction des échantillons pour lesquels ladite grandeur caractéristique est élevée et avec un poids faible les résidus positifs de ladite soustraction.

12. Procédé de traitement d'un signal radiofréquence de navigation comprenant une étape d'estimation d'une grandeur caractéristique dudit signal choisie dans le groupe amplitude, puissance, une étape de filtrage de ladite grandeur et une étape d'inversion de ladite grandeur, **caractérisé en ce que** un paramètre au moins d'au moins une des étapes du groupe estimation, filtrage est ajustable pour effectuer un traitement sensiblement optimal d'interférences perturbant le signal radiofréquence.

13. Procédé de traitement d'un signal radiofréquence selon la revendication 12 **caractérisé en ce qu'**un des paramètres ajustables est la fréquence d'échantillonnage de l'étape de filtrage fixée en fonction des caractéristiques du signal initial et de celles du signal interférant.

14. Procédé de traitement d'un signal radiofréquence selon l'une des revendications 12 à 13 **caractérisé en ce qu'**un au moins des paramètres ajustables est un paramètre de calcul d'une fonction d'estimation du bruit thermique du récepteur.

15. Procédé de traitement d'un signal radiofréquence selon l'une des revendications 12 à 13 **caractérisé en ce qu'**il comprend en outre une étape d'estimation du bruit thermique dont les sorties sont fournies à l'étape d'estimation de ladite grandeur caractéristique dudit signal pour corriger le biais de ladite estimation.

FIG.1

FIG.2

FIG.3

FIG.4

FIG.5

EP 2 000 815 A1

Signal reçu ─────────────────────── Retard N ──── X ───── Vers partie basse CM

Estimation amplitude ou puissance ── Filtrage glissant ── / 

CAG numérique « instantanée » ou inversion de puissance

CAG analogique avec quelques ms de réaction

Estimation amplitude ou puissance ── Filtrage ──── $C_{CAG}$ ── $Sat_{CAG}$ / $-Sat_{CAG}$

Commande VGA ── Intégrateur infini avec saturation ── $C_{CAG}$ ── Fonction non - linéaire

# FIG.6

FIG.7

EP 2 000 815 A1

Signal reçu ──────────────┬────────────────────────[ Retard N ]────[ X ]──────── Vers partie basse CM
                          │                                          │
                          └──[ Estimation      ]──[ Filtrage ]──────┬[ / ]
                             [ amplitude ou    ]   [ glissant ]      │
                             [ puissance       ]                     │
                                                                     │
                                                            $C_{CAG}$
                                                                │
                                                              ( - )      [ $Sat_{CAG}$     ]
                                                              ( + )      [ $-Sat_{CAG}$    ]

Commande VGA ──────[ Intégrateur infini ]───◁ $C_{CAG}$ ───[ Fonction non - linéaire ]
                   [ avec saturation     ]

# FIG.8

FIG.9

EP 2 000 815 A1

**EP 2 000 815 A1**

**Office européen**
**des brevets**

**RAPPORT DE RECHERCHE EUROPEENNE**

Numéro de la demande

EP 08 15 6039

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 111 802 A (MITSUBISHI ELECTRIC CORP [JP]) 27 juin 2001 (2001-06-27) * alinéas [0028] - [0033], [0037] - [0042], [0060]; figures 2,3 * | 1,2,12, 13 | INV. G01S1/00 |
| A | US 2004/091025 A1 (SINDHUSHAYANA NAGABHUSHANA T [US] ET AL) 13 mai 2004 (2004-05-13) * alinéas [0068], [0069]; figures 1-5 * | 1-15 | |
| A | EP 0 430 468 A (FORD MOTOR CO [GB]; FORD FRANCE [FR]; FORD WERKE AG [DE]) 5 juin 1991 (1991-06-05) * colonne 4, ligne 49 - colonne 6, ligne 9; figure 4 * | 1-15 | |
| A | US 6 670 914 B1 (NAJARIAN RICHARD [US] ET AL) 30 décembre 2003 (2003-12-30) * le document en entier * | 1-15 | |
| A | FR 2 832 878 A (THALES SA [FR]) 30 mai 2003 (2003-05-30) * le document en entier * | 1-15 | DOMAINES TECHNIQUES RECHERCHES (IPC) G01S H04B H03G |
| A | WO 03/058270 A (THALES SA [FR]; KIRBY ESTELLE [FR]; RENARD ALAIN [FR]) 17 juillet 2003 (2003-07-17) * le document en entier * | 1-15 | |

Le présent rapport a été établi pour toutes les revendications

| Lieu de la recherche | Date d'achèvement de la recherche | Examinateur |
|---|---|---|
| Munich | 4 juin 2008 | Fanjul Caudevilla, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 15 6039

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-06-2008

| Document brevet cité au rapport de recherche | | Date de publication | Membre(s) de la famille de brevet(s) | | Date de publication |
|---|---|---|---|---|---|
| EP 1111802 | A | 27-06-2001 | DE | 60026254 T2 | 23-11-2006 |
| | | | JP | 3454214 B2 | 06-10-2003 |
| | | | JP | 2001186031 A | 06-07-2001 |
| | | | US | 6795559 B1 | 21-09-2004 |
| US 2004091025 | A1 | 13-05-2004 | AT | 361588 T | 15-05-2007 |
| | | | AU | 4999900 A | 21-11-2000 |
| | | | BR | 0010420 A | 30-04-2002 |
| | | | CN | 1350724 A | 22-05-2002 |
| | | | DE | 60034669 T2 | 10-01-2008 |
| | | | EP | 1177640 A1 | 06-02-2002 |
| | | | HK | 1043891 A1 | 22-04-2005 |
| | | | JP | 2002544708 T | 24-12-2002 |
| | | | TW | 462150 B | 01-11-2001 |
| | | | WO | 0069090 A1 | 16-11-2000 |
| | | | US | 6661832 B1 | 09-12-2003 |
| EP 0430468 | A | 05-06-1991 | CA | 2026812 A1 | 31-05-1991 |
| | | | DE | 69028491 D1 | 17-10-1996 |
| | | | DE | 69028491 T2 | 06-02-1997 |
| | | | US | 5073976 A | 17-12-1991 |
| US 6670914 | B1 | 30-12-2003 | AUCUN | | |
| FR 2832878 | A | 30-05-2003 | CA | 2435796 A1 | 05-06-2003 |
| | | | EP | 1461634 A1 | 29-09-2004 |
| | | | WO | 03046602 A1 | 05-06-2003 |
| | | | US | 2004258178 A1 | 23-12-2004 |
| WO 03058270 | A | 17-07-2003 | AU | 2002365019 A1 | 24-07-2003 |
| | | | CA | 2439563 A1 | 17-07-2003 |
| | | | EP | 1463954 A1 | 06-10-2004 |
| | | | FR | 2834563 A1 | 11-07-2003 |
| | | | US | 2005104767 A1 | 19-05-2005 |

EPO FORM P0460

Pour tout renseignement concernant cette annexe : voir Journal Officiel de l'Office européen des brevets, No.12/82